# EUROPÄISCHE PATENTSCHRIFT

(11) **EP 0 673 890 B1**
(45) Veröffentlichungstag und Bekanntmachung des Hinweises auf die Patenterteilung: **28.04.1999**
(21) Anmeldenummer: 94117203.3
(22) Anmeldetag: 31.10.1994
(51) Int. Cl.: C03B 33/03

(54) **Flachglasbearbeitungstisch**
Plate glass working table
Table à travailler de verre plat

(30) Priorität: 24.03.1994 DE 4410221
(43) Veröffentlichungstag der Anmeldung: 27.09.1995
(73) Patentinhaber: HEGLA Fahrzeug- u. Maschinenbau GmbH & Co. KG, D-37688 Beverungen (DE)
(72) Erfinder: Glaser, Siegfried, D-37688 Beverungen (DE)
(74) Vertreter: Patentanwälte Dr. Solf & Zapf

(56) Entgegenhaltungen:
- US-A- 3 790 003

## Beschreibung

Die Erfindung betrifft einen Flachglasbearbeitungstisch nach dem Oberbegriff des Anspruchs 1.

Bekannte Kipptische zum Glasschneiden weisen eine kippbare Tischfläche oder -platte und ein Tischgestell auf. Die Kippbewegung wird z. B. durch mechanische, pneumatische oder hydraulische Bewegungseinrichtungen ausgeführt. Die Tischplatte ist auf der Oberfläche mit einem Filzbelag oder dergleichen versehen und mit Mitteln zum Ausbilden eines Luftkissens ausgestattet. An der außenseitigen Längsseitenkante der Arbeitsseite des Tisches befinden sich herausklappbare Glastafelaufstell- und Positionierungseinrichtungen. Im Bereich der beiden Längsseitenkanten der Tischplatte befinden sich etwas unterhalb und nach außen abstehend Linearführungen, auf denen eine Schneidbrücke manuell oder automatisch verschiebbar gelagert ist.

Zum Auflegen einer Glastafel wird die gesamte Tischplatte einschließlich der Schneidbrücke aus der Horizontalen um eine parallel zur arbeitsseitigen Längsseitenkante liegende Achse in eine etwa um 5° bis 6° gegenüber der Vertikalen geneigte, aufgestellte Position geschwenkt. Die Glastafel wird auf die ausgeklappte Glastafelaufstelleinrichtung gestellt und gegen die geneigte Tischfläche gelehnt. Zum Anritzen und Brechen des Glases wird die Tischplatte einschließlich der Schneidbrücke wieder in die horizontale Lage verschwenkt. Die Glastafel wird bei angeschaltetem Luftkissen gegen Positionierungsanschläge geschoben und durch Ausschalten des Luftkissens abgelegt. Die nun fest auf der Tischplatte liegende Glastafel wird beim Verfahren der Schneidbrücke geritzt, so daß Glastafelfelder entstehen. Dabei liegt die gewünschte Genauigkeit der Linienführung für den Ritzvorgang bei ± 0,3 mm. Nach dem Anritzen wird die Schneidbrücke in ihre Parkposition gefahren und die Glastafel bei eingeschaltetem Luftkissen bezüglich in der Tischplatte angeordneter Brechleisten positioniert und nach Abschalten des Luftkissens mittels Brechleisten längs der Ritzlinien gebrochen.

Glastafelabschnitte, die nicht manuell von Hand abgetragen werden können, werden auf der Tischfläche an der herausgeschwenkten Glastafelaufstelleinrichtung positioniert; anschließend wird wiederum die Tischplatte mit Schneidbrücke hochgeschwenkt. In dieser geneigten Stellung werden die Glastafelabschnitte mittels einer Vakuumsaugeinrichtung abgenommen.

Durch die erforderliche Genauigkeit und die wechselnde Belastung, hervorgerufen durch den Schwenkvorgang der gesamten Tischplatte einschließlich Schneidbrücke, ist es unumgänglich, die Linearführung und die Lagerung der Schneidbrücke außerordentlich massiv auszuführen.

Um die Anforderungen an die Schwenkeinrichtung zu verringern und die Linearführung weniger zu belasten, sind auch schon Ausführungen der Kipptische realisiert worden, bei denen ein Parkpositionsbereich der Tischplatte mit Schneidbrücke in horizontaler Stellung stehenbleibt und lediglich die Tischplatte daneben gekippt wird. Hierbei sind die Linearführungen des Kippbereichs an der Tischplatte von den Linearführungen des Parkbereichs entkoppelbar ausgeführt.

Zum Abnehmen von gebrochenen größeren Glastafelabschnitten hat man bei einer anderen Ausführungsform eines Kipptisches an den kurzen linearführungsfreien Stirnkanten des Kipptisches auch schon um eine parallel zur Stirnkante angeordnete Schwenkachse schwenkbare Arme vorgesehen, die aus der Tischplatte herausklappbar sind. Diese Armanordnung ist jedoch nicht geeignet für ein längsseitiges Aufkippen einer großen Glastafel.

Für das längsseitige Aufkippen einer Glastafel sind Flachglasbearbeitungstische entwickelt worden, bei denen als Glastafelauflegeeinrichtung in die stationär bleibende Tischplatte Schwenkarme eingelassen sind, die mit einem komplizierten Hebelmechanismus aus der Tischplattenebene herausgehoben und über die arbeitsseitige Längsseitenkante der Tischplatte auf einer Kreisbogenbahn hinweggehoben werden, bis sie in eine um etwa 5° zur Vertikalen geneigte Aufnahmestellung verschwenkt sind, in der sie eine Glastafel aufnehmen können. Die an der arbeitsseitigen Längsseitenkante angeordnete Linearführungsseitenrichtung wird von den Schwenkarmen in weitem Bogen überfahren, so daß sich die Glastafelaufstelleinrichtung an den unteren Enden der Schwenkarme unter die arbeitsseitige Längsseitenkante bis fast auf den Boden absenken. An den unteren Enden der Schwenkarme sind ausklappbare Auflageelemente vorgesehen, auf die eine Glastafel aufgesetzt wird. Die an die Schwenkarme angelegte Glastafel wird mittels der zurückfahrenden Schwenkarme wieder in weitem Bogen über die arbeitsseitige Längsseitenkante gehoben und auf der Tischplatte abgelegt. Der Oberbegriff des Anspruchs 1 basiert auf diesen Flachglasbearbeitungstichen.

Durch das Absenken des Bereichs der Glastafelaufstelleinrichtung an den unteren Enden der Schwenkarme unter die arbeitsseitige Längsseitenkante müssen die Glastafeln beim Aufsetzen auf die Auflageelemente nicht oder nur geringfügig angehoben werden, da die Auflageelemente an den unteren Enden der Schwenkarme mit geringem Abstand zur Bodenoberfläche, auf der der Flachglasbearbeitungstisch steht, angeordnet sind.

Bei diesen Flachglasbearbeitungstischen ist nachteilig, daß wegen des relativ langen Schwenkweges ein aufwendiger Hebelgelenkmechanismus zum Betätigen der relativ langen Schwenkarme erforderlich ist, der zum Anheben und Auflegen der Glastafel auf die Tischplatte große Dreh- und Hubmomente überwinden muß. Die Schwenkarme erstrecken sich fast über die gesamte Breite des Flachglasbearbeitungstisches, so daß senkrecht zu den Schwenkarmen verlaufende Brechleisten nur abschnittsweise zwischen den Armen vorgesehen werden können, die separate Betätigungseinrichtungen erfordern.

Der Erfindung liegt die Aufgabe zugrunde, einen Flachglasbearbeitungstisch mit einer Glastafelauflegeeinrichtung zu schaffen, die mit Schwenkarmen arbeitet und dennoch einfach ausgebildet ist.

Diese Aufgabe wird durch einen Flachglasbearbeitungstisch mit den Merkmalen des Anspruchs 1 gelöst. Vorteilhafte Ausgestaltungen der Erfindung sind in den Unteransprüchen gekennzeichnet.

Durch das Anordnen der Schwenkachse der Schwenkarme unterhalb der Tischebene im Bereich der arbeitsseitigen Längsseitenkante und oberhalb der arbeitsseitigen Linearführung seitlich außenseitig neben der Tischplatte und dadurch, daß die Schwenkarme nach unten verlängerbar ausgebildet sind, ist der Aufbau der Glastafelauflegeeinrichtung sehr einfach.

Zudem sind beim Auflegevorgang keine Hubbewegungen und geringere Drehmomente als bei herkömmlichen mit Schwenkarmen arbeitenden Flachglasbearbeitungstischen aufzubringen, da die aufzulegende Glastafel nicht angehoben werden muß, sondern nur mit einer Drehbewegung um die arbeitsseitige Längsseitenkante gekippt wird, wobei sich die durch den Bereich der unterhalb der Längsseitenkante angeordnete Glastafel erzeugten Drehmomente mit den Drehmomenten des entsprechenden Bereichs oberhalb der Längsseitenkante kompensieren, so daß die resultierenden Drehmomente kleiner als bei bekannten Flachglasbearbeitungstischen sind, wodurch die Betätigungseinrichtungen für die Schwenkarme weniger Bauteile und weniger Raum erfordern und einfacher ausgebildet sein können.

Anhand des in der Zeichnung abgebildeten Beispiels wird die Erfindung im folgenden weitergehend verdeutlicht. Es zeigen:
- Fig. 1A: perspektivisch eine schematische Darstellung eines erfindungsgemäßen Flachglasbearbeitungstisches mit eingeklappten Schwenkarmen;
- Fig. 1B: perspektivisch eine schematische Darstellung des Flachglasbearbeitungstisches gemäß Fig. 1A mit verschwenkten Schwenkarmen;
- Fig. 2: eine Schnittansicht quer zur und im Bereich der arbeitsseitigen Längsseitenkante des Flachglasbearbeitungstisches nach Fig. 1A mit einem ausgezogenen Teil eines Schwenkarms und einem Teil der Schneidbrücke;
- Fig. 3: eine Schnittansicht quer zur und im Bereich der arbeitsseitigen Längsseitenkante des Flachglasbearbeitungstisches nach Fig. 1A mit einem verschwenkten und teleskopartig verlängerten Schwenkarm;
- Fig. 4: perspektivisch eine schematische Darstellung eines Flachglasbearbeitungstisches mit vier verschwenkten Schwenkarmen.

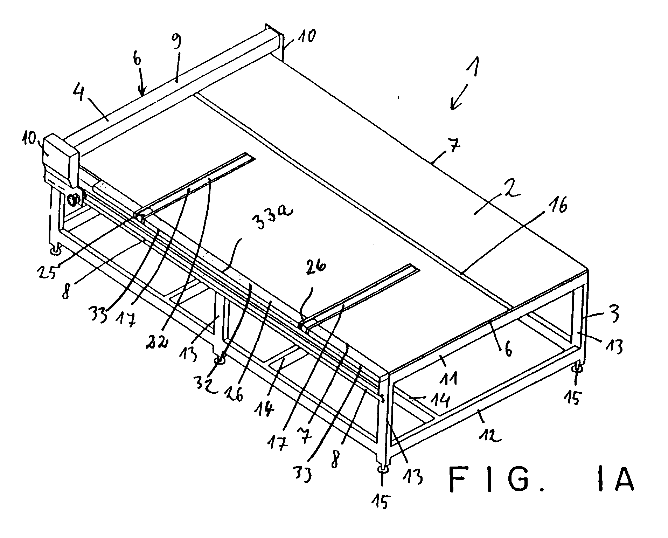

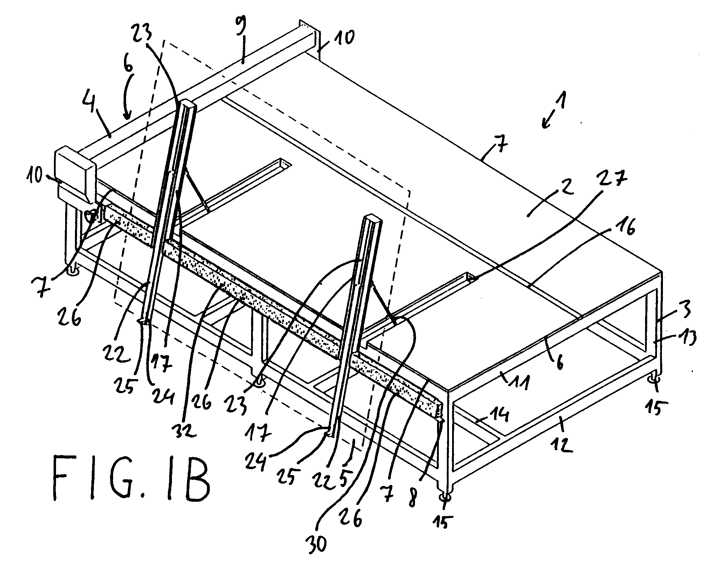

Der erfindungsgemäße Flachglasbearbeitungstisch 1 weist eine Tischplatte 2, die auf einem Tischgestell 3 lagert, auf. Über der Tischplatte 2 ist eine Schneidbrücke 4 angeordnet zum Schneiden einer auf der Tischplatte 2 aufliegenden in Fig. 1B gestrichelt angedeuteten Flachglastafel 5 (Fig. 1A, 1B).

Die Tischplatte 2 hat eine rechteckige Form mit zwei kurzen Stirnkanten 6 und zwei langen Längsseitenkanten 7. Die Schneidbrücke 4 ist sich parallel zu den kurzen Stirnkanten 6 erstreckend angeordnet und stützt sich auf zwei Linearführungen 8 ab, die am Tischgestell 3 jeweils parallel zu einer Längsseitenkante 7 verlaufend unterhalb der Tischebene befestigt sind.

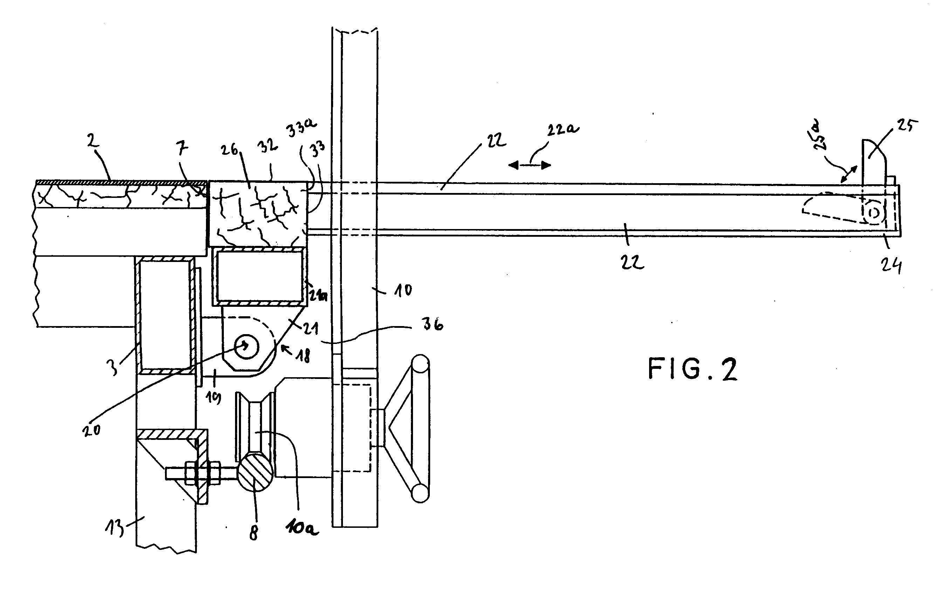

Die seitlich überstehende Schneidbrücke 4 besteht aus einem als Schiene dienenden Brückensteg 9, an dem ein Werkzeugschlitten 9a verfahrbar angeordnet ist. Der Brückensteg 9 stützt sich über zwei seitlich sich nach unten zu den Linearführungen 8 erstreckende Brückenstützen 10 über Rollen 10a auf den Linearführungen 8 ab und ist auf letzteren verfahrbar (Fig. 2).

Das Tischgestell 3 ist ein einfaches Rahmengestell mit einem oberen Rahmen 11, der die Tischplatte 2 trägt, und einem unteren Rahmen 12, der die sich vom oberen Rahmen erstreckenden Standbeine 13 im Bodenbereich stabilisiert. Zur weiteren Stabilisierung sind Quer- und Längsstreben 14 im unteren Rahmen 12 vorgesehen. Das Tischgestell 3 steht auf in der Höhe verstellbaren Füßen 15, die in das Tischgestell ein- und ausgeschraubt werden können, um die Tischplatte 2 in eine waagrechte Stellung justieren zu können.

Die Tischplatte 2 ist zum Beispiel mit Filz belegt und mit Luftlöchern (nicht dargestellt) versehen, so daß mit einer entsprechenden Drucklufteinrichtung ein Luftkissen auf der Tischplatte 2 zum Verschieben einer auf der Tischplatte 2 aufliegenden Glastafel 5 erzeugt werden kann. In der Tischplatte 2 ist eine parallel zu den Längsseitenkanten 7 verlaufende Brechleiste 16 eingelassen, die möglichst bündig mit der Oberfläche der Tischplatte 2 abschließt. Die Brechleiste 16 erstreckt sich über die gesamte Tischlänge und ist mit einer Hubeinrichtung (nicht dargestellt) versehen, die die Brechleiste 16 etwas über die Oberfläche der Tischplatte überstehend anheben kann, um eine darauf liegende und entlang von Brechlinien angeritzte Flachglastafel zu brechen.

Die Tischplatte 2 kann auch noch mit weiteren Brechleisten ausgerüstet sein, die zum Beispiel parallel zu den Stirnkanten 6 verlaufend angeordnet sein können.

Als Glastafelauflegeeinrichtung sind in die Tischplatte 2 mindestens zwei Schwenkarme 17 eingelassen, die im eingeklappten Zustand bzw. in ihrer horizontalen Ruhestellung (Fig. 1A) nicht über die Oberfläche der Tischplatte 2 herausragen. Die Schwenkarme 17 sind quer zu den Längsseitenkanten 7 verlaufend angeordnet, wobei sie unterhalb der Tischplattenebene im Bereich der arbeitsseitigen Längsseitenkante 7 und oberhalb der arbeitsseitigen Linearführung 8 an den Flachglasbearbeitungstisch 1 seitlich außerhalb der Tischplatte 2 angelenkt sind.

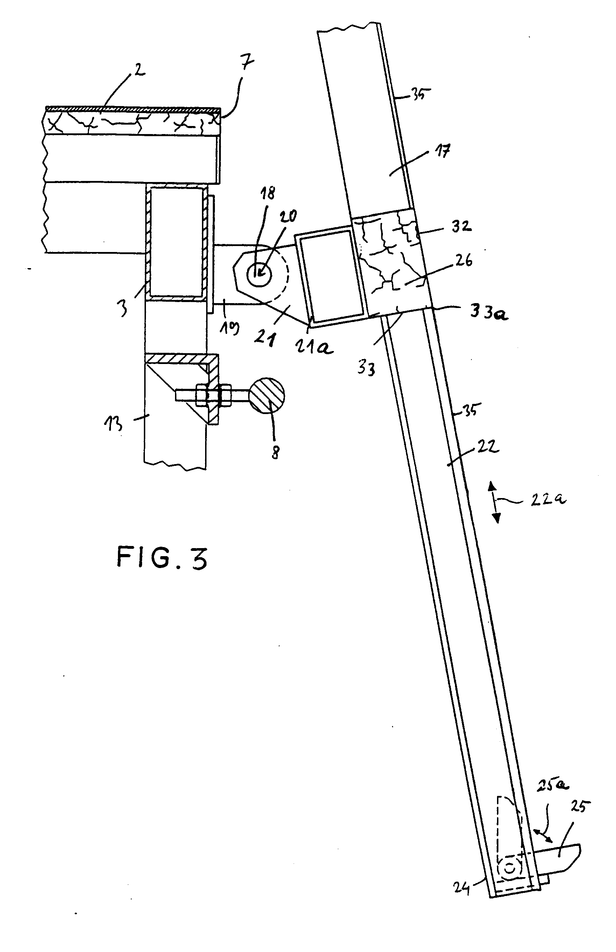

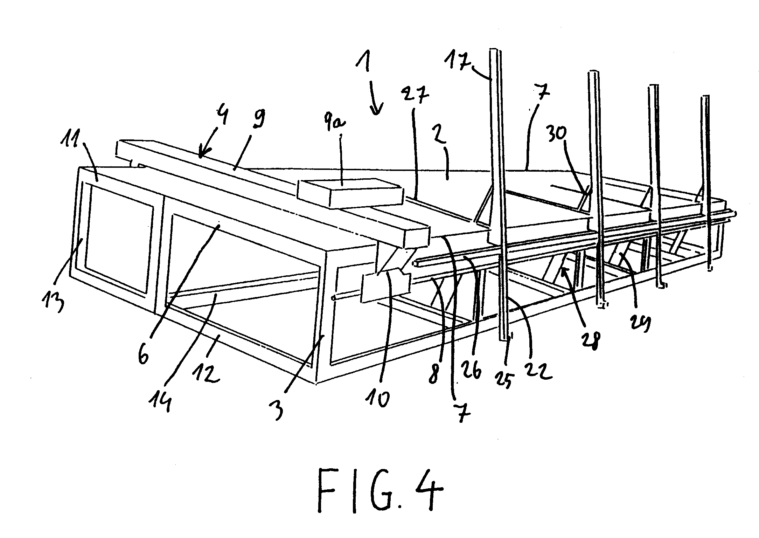

Hierzu ist vorzugsweise für jeden Schwenkarm 17 ein Schwenkgelenk 18 mit einem am Tischgestell 3 oberhalb der arbeitsseitigen Linearführung 8 befestigten, seitlich horizontal vorstehenden Gelenkhalterungssteg 19 vorgesehen, an den ein um eine parallel zur Längskante 7 verlaufende, vorzugsweise vertikal über der Linearführung 8 angeordnete Schwenkachse 20 schwenkbarer Gelenkhebelarm 21 schwenkbar angelenkt ist. Am freien Ende des Gelenkarms 21 ist ein Tragrohr 21a mit z. B. rechteckigem Querschnitt befestigt. Das Tragrohr 21a verläuft parallel zur Schwenkachse 20 und steht mit allen Schwenkgelenken 18 in Verbindung. Jeder Schwenkarm 17 steht mit dem Tragrohr 21a in fester Verbindung, so daß er aus seiner horizontalen Ruhestellung in eine etwa vertikale Arbeitsstellung verschwenkt werden kann. Da die Schwenkachse 20 bezüglich der arbeitsseitigen Längsseitenkante 7 nach unten versetzt und seitlich vorspringend angeordnet ist, und das Ende der Schwenkarme 17 mit einem Abstand von der Schwenkachse 20 gelagert ist, werden die Schwenkarme 17 beim Verschwenken nicht nur in die vertikale Arbeitsstellung verbracht, sondern auch über die Linearführung 8 hinweggeschwenkt, da der Gelenkarm 21 mit Tragrohr 21a und der Gelenkhalterungssteg 19 als seitliches Abstandshalteelement zwischen den Schwenkarmen 17 und der Linearführung 8 wirken (Fig. 3, 4). Wesentlich ist dabei, daß das Ende der Schwenkarme 17 bzw. der weiter unten beschriebenen unverlängerten, im Tisch lagernden Schwenkarmstücke 23 nicht derart seitlich übersteht, daß die Brückenstütze 10 beim Verfahren der Brücke 9 behindert wird.

Erfindungsgemäß wird der Raum unterhalb der Tischebene und oberhalb der arbeitsseitigen Linearführung 8 sowie zwischen der entsprechenden Brückenstütze 10 und dem Tischgestell 3 bzw. einer sich von der arbeitsseitigen Längsseitenkante 7 vertikal nach unten erstreckenden Längsseitenebene genutzt, um darin die Gelenke 18 zum Schwenken der Schwenkarme 17 anzuordnen.

Die Schwenkarme 17 sind jeweils mit einem zweckmäßigerweise teleskopartig in Doppelpfeilrichtung 22a ausfahrbaren z. B. rohrförmigen oder im Querschnitt U-förmigen Verlängerungsarm 22 versehen, der über die arbeitsseitige Längsseitenkante 7 hinaus ausgezogen werden kann.

Für die Verlängerbarkeit ist jeder Schwenkarm 17 mehrstückig ausgebildet und besteht nach einer besonderen Ausführungsart der Erfindung aus einem rohrförmigen oder nach oben offenen U-förmigen Schienenprofil 23, in dem der Verlängerungsarms 22 verschiebbar lagert. Am freien Ende 24 des Verlängerungsarm 22 ist ein aus dem Rohr in eine etwa rechtwinklige Stellung ausklappbarer Auflagefußsteg 25 angeordnet (Fig. 3), der bei ausgeschwenktem Schwenkarm 17 ausgeklappt wird, so daß darauf eine Flachglastafel 5 aufgesetzt werden kann. In der Ruhestellung des Schwenkarms 17 wird der Auflagefußsteg 25 eingeklappt (Doppelpfeilrichtung 25a), so daß er nicht über die Oberfläche der Tischplatte 2 übersteht. Zur Lagerung der Schwenkarme 17 in der Ruhestellung ist die Tischplatte 2 mit entsprechenden Nuten 27 versehen, die sich von etwa der Quermitte der Tischplatte 2 bis zur arbeitsseitigen Seitenkante 7 erstrecken. Die Schwenkarme 17 sind in der eingeklappten horizontalen Ruhestellung mit eingezogenen Verlängerungsarmen 22 ohne Überstand in die Nuten 27 eingebettet.

Die Verlängerungsarme 22 sind vorzugsweise unterschiedlich lang ausziehbar und in unterschiedlichen Stellungen arretierbar ausgebildet. Anstelle ausfahrbarer Verlängerungsarme 22 können auch ansteckbare Verlängerungsarme verwendet werden, die jeweils vor dem Verschwenken angesetzt und befestigt und nach dem Verschwenken wieder abgenommen werden.

Zweckmäßigerweise ist der durch die Gelenkteile 19, 21 und 21a bewirkte seitliche Abstand der Schwenkarme 17 von der Längsseitenkante 7 so groß, daß die Verlängerungsarme 22 der Schwenkarme 17 immer so weit seitlich vorstehen, daß sie auch in einer fast vertikalen Stellung zur Tischplatte 2 nicht mit der arbeitsseitigen Linearführung 8 in Berührung kommen (Fig. 3).

Nach einer besonderen Ausführungsfrom der Erfindung ist auf dem Tragrohr 21a ist ein Brechleistenbalken 26 mit rechteckigem Querschnitt z. B. aus Holz befestigt, der sich von der Parkposition der Schneidbrücke 4 bis zur gegenüberliegenden Stirnkante 6 erstreckt und somit genauso lang ist wie das Tragrohr 21a.

Der Balken 26 schließt mit seiner der Befestigungsseite gegenüberliegenden Oberseite 32 bündig mit der Ebene der Tischplatte 2 ab, wenn sich die Schwenkarme 17 in ihrer Ruhestellung befinden. Der Balken 26 kann ein massiver Holzbalken sein oder auf seiner Oberseite 32 (und wahlweise auch auf seiner Stirnseite 33) mit Holz oder Filz belegt sein und zweckmäßigerweise als seitliche Brechkante fungieren. Die Schwenkarme sind dazu in entsprechenden Aussparungen 26a des Balkens 26 untergebracht, wobei sie nicht über die Oberseite 32 des Balkens 26 herausragen und über die Brechkante 33a des Balkens 26 vorstehen.

Ist die Schneidbrücke 4 in ihrer Parkposition, kann die Glasablegeeinrichtung als Einheit, umfassend alle Schwenkarme 17, das Tragrohr 21a und den Balken 26, verschwenkt werden, in z. B. eine übliche Stellung von etwa 5° bis 9° gegenüber der Vertikalen, um eine Glastafel aufzunehmen. Hierzu werden die Verlängerungsarme 22 ausgefahren und die Auflagefußstege 25 ausgeklappt, so daß eine Glastafel 5 mit ihrer Unterkante auf die Auflagefußstege 25 gesetzt und gegen die Schwenkarme 17 gelegt werden kann.

Die Drehmomente des Bereichs der Glastafel 5, der unterhalb der Schwenkachse 20 angeordnet ist, heben sich mit den Drehmomenten des entsprechenden Bereichs oberhalb der Schwenkachse 20 auf, so daß eine Antriebseinrichtung 28 zum Verschwenken der Schwenkarme 17 nur gegen die resultierenden Drehmomente des weiter nach oben überstehenden Bereichs der Glastafel 5 arbeiten muß.

Eine zweckmäßige Einrichtung 28 zum Verschwenken der Schwenkarme 17 umfaßt vorzugsweise für jeden Schwenkarm 17 eine Kolbenzylinderanordnung mit einem Zylinder 29, mit einem im Zylinder 29 beweglichen Kolben mit Kolgenstange 30. An der Unterseite jedes Schwenkarms 17 ist die Hubstange 30 angelenkt, die eine Öffnung (nicht dargestellt) in der Tischplatte 2 im Bereich der entsprechenden Nut 27 durchgreift und in den unterhalb der Tischplatte 2 angeordneten, am Tischgestell 3 angelenkt befestigten Hubzylinder 29 eintaucht (Fig. 4). Die Hubstange 30 ist vorzugsweise als Spindel ausgebildet, die durch Drehen einer entsprechenden Umlaufmutter in ihrer Länge verändert und gehalten werden kann, so daß der Schwenkwinkel der Schwenkarme 17 einstellbar ist.

Es liegt im Rahmen der Erfindung, die Schwenkarme 17 auch einzeln ohne Zwischenschaltung eines Tragrohres 21a am Tischgestell 3 mit je einem Schwenkgelenk 18 anzulenken. Ferner können die Schwenkarme 17 einzeln mit einer gemeinsamen Schwenkwelle in Verbindung stehen, mit der sie drehfest verbunden sind, so daß sie durch die Drehung der Schwenkwelle entsprechend verschwenkt werden.

Die Schwenkarme 17 können aus Kunststoff oder Metall gefertigt sein und weisen auf ihrer Oberseite einen elastischen Belag 35 zum Schutz der aufgelegten Glasscheiben auf.

Nach der Erfindung ist somit die Anlenkung der Schwenkarme 17 im Raum 36 (Fig. 2) unterhalb der Tischplattenebene und oberhalb der Linearführung 8 sowie zwischen der vertikalen Ebene, in der die Längsseitenkante 7 liegt, und der Brückenstütze 10 angeordnet, wobei die angelenkten Enden der Schwenkarme 17 nicht bis zur Brückenstütze 10 reichen und somit die freie Verfahrbarkeit der Brücke 9 gewährleisten und wobei Verlängerungen 22 für die Schwenkarme 17 vorgesehen sind, die z. B. aus den in der Tischplatte 2 aufgenommenen Schwenkarmstücken 23 ausziehbar oder an die Enden ansetzbar oder in die Schwenkarmstücke einschiebbar sind und für das Aufnehmen einer Glastafel neben den Tisch und Verkippen der Glastafel auf den Tisch zum Einsatz kommen.

## Patentansprüche

1. Flachglasbearbeitungstisch (1) mit einer Tischplatte (2) und einer oberhalb der Tischplatte (2) angeordneten und verfahrbaren Einrichtung zum Bearbeiten einer Glastafel (5), insbesondere zum Glasschneiden, wobei unterhalb der Tischplattenebene und neben einer Längsseitenkante (7) der Tischplatte (2) eine eine Stütze (10) der Bearbeitungseinrichtung tragende Linearführungsschiene (8) zum Abstützen und Verschieben der Bearbeitungseinrichtung angeordnet und der Flachglasbearbeitungstisch (1) mit einer Glastafelauflegeeinrichtung ausgerüstet ist, die mindestens zwei, rechtwinklig zur Längsseitenkante (7) sich erstreckende, auf Abstand voneinander angeordnete Schwenkarme (17) aufweist, die in einer horizontalen Ruhestellung nicht über die Oberfläche der Tischplatte (2) überstehen und aus der Tischplatte (2) in eine etwa vertikale Stellung seitlich neben die Längsseitenkante (7) um eine Schwenkachse (20) schwenkbar sind,
**dadurch gekennzeichnet,**
daß die Schwenkachse (20) in einem Raum unterhalb der Tischplattenebene und oberhalb der Linearführung (8) angeordnet ist, daß die Schwenkarme (17) für ihre Ruhestellung nur so lang ausgeführt sind, daß sie nicht in den Verfahrweg der Stütze (10) ragen, und daß ein Verlängerungsteil (22) für eine Verlängerung in Richtung Verfahrweg der Stütze (10) für die Schwenkarme (17) vorgesehen ist.

2. Flachglasbearbeitungstisch nach Anspruch 1,
**dadurch gekennzeichnet,**
daß das Verlängerungsteil ein teleskopartig aus dem Schwenkarm (17) ausziehbares Armstück (22) ist.

3. Flachglasbearbeitungstisch nach Anspruch 1 und/oder 2,
dadurch **gekennzeichnet,**
daß die Schwenkarme (17) jeweils mit einem Gelenk (18) am Flachglasbearbeitungstisch angelenkt sind.

4. Flachglasbearbeitungstisch nach Anspruch 3,
dadurch **gekennzeichnet,**
daß die Gelenke (18) jeweils aus einem am Tisch befestigten Gelenkhalterungssteg (19), der Schwenkachse (20) und einem an der Schwenkachse (20) befestigten sowie mit dem Endbereich eines Schwenkarms (17) in fester Verbindung stehenden Gelenkhebelarm (21) bestehen.

5. Flachglasbearbeitungstisch nach Anspruch 4,
dadurch **gekennzeichnet,**
daß alle Gelenkhebelarme (21) an einem sich parallel zur Längsseitenkante (7) erstreckenden Tragrohr (21a) angeordnet sind und die Endbereiche der Schwenkarme (17) auf dem Tragrohr (21a) befestigt sind.

6. Flachglasbearbeitungstisch nach einem oder mehreren der Ansprüche 1 bis 5,
**dadurch gekennzeichnet,**
daß auf dem Tragrohr (21a) ein als Brechelement dienender Balken (26) angeordnet ist, wobei die auf dem Rohrstück (21a) befestigten Endbereiche der Tragarme (17) Aussparungen des Balkens (26) durchgreifen.

7. Flachglasbearbeitungstisch nach einem oder mehreren der Ansprüche 1 bis 6,
**dadurch gekennzeichnet,**
daß die Verlängerungen (22) an ihren freien Enden (24) mit ausklappbaren Auflagefußstegen (25) ausgerüstet sind.

8. Flachglasbearbeitungstisch nach einem oder mehreren der Ansprüche 2 bis 7,
dadurch **gekennzeichnet,**
daß die Schwenkarme (17) ein nach oben offenes U-förmiges Schienenprofilstück (23) aufweisen, in dem jeweils ein Verlängerungsarmstück (22) verschiebbar lagert.

9. Flachglasbearbeitungstisch nach einem oder mehreren der Ansprüche 1 bis 8,
dadurch **gekennzeichnet,**
daß die Schwenkarme (17) von der Schwenkachse (20) derart beabstandet sind, daß sie in ihrer etwa vertikalen Stellung seitlich von der Linearführung (8) beabstandet sind.

10. Flachglasbearbeitungstisch nach einem oder mehreren der Ansprüche 1 bis 9,
dadurch **gekennzeichnet,**
daß eine Einrichtung (28) zum Verschwenken der Schwenkarme (17) vorgesehen ist, die mittels Kolbenzylinderanordnungen (29, 30) an der Unterseite der Schwenkarme (17) angreift.

11. Flachglasbearbeitungstisch nach Anspruch 10,
dadurch **gekennzeichnet,**
daß die Zylinder (29) unterhalb der Tischplatte (2) angeordnet sind, und daß die Hubstangen (30) die Tischplatte (2) durch Öffnungen in der Tischplatte (2) durchgreifen.

12. Flachglasbearbeitungstisch nach Anspruch 10 und/oder 11,
dadurch **gekennzeichnet,**
daß die Hubstangen (30) etwa in der Längsmitte der verlängerten Schwenkarme (17) angelenkt sind.

## Claims

1. Flat glass processing table (1) with a tabletop (2) and a movable device arranged above the tabletop (2) for the processing of a glass panel (5), especially for glass cutting, in which situation a linear guide rail (10) is arranged beneath the level of the tabletop and next to a longitudinal side edge (7) of the tabletop (2), which carries a support (10) for the processing device, to support and move the processing device, and which is equipped with a glass panel deposition device, which features at last two pivot arms (17) extending at right angles to the longitudinal side edge (7), arranged at an interval from each other, which in a horizontal position of rest do not project over the surface of the tabletop (2), and from which the tabletop (2) is capable of being pivoted into an approximately vertical position laterally adjacent to the longitudinal side edge (7) about a pivot axis element (20),
characterised in that:
The pivot axis (20) is arranged in a space beneath the tabletop level and above the linear guide (8); that the pivot arms (17) are only designed to be in a position of rest for as long as they do not project into the travel path of the support (10); and that an extension piece (22) is provided for an extension in the direction of the travel path of the support (10) for the pivot arms (17).

2. Flat glass processing table according to Claim 1,
characterised in that:
The extension piece is an arm section (22) which can be extended in telescopic fashion out of the pivot arm (17).

3. Flat glass processing table according to Claims 1 and/or 2,
characterised in that:
The pivot arms (17) are in each case jointed with a joint element (18) on the flat glass processing table.

4. Flat glass processing table according to Claim 3,
characterised in that:
The joints (18) consist in each case of a joint retaining web (19) secured to the table, the pivot axis element (20), and a joint lever arm (21) secured to the pivot axis element (20) as well as being securely connected to the end section of a pivot arm (17).

5. Flat glass processing table according to Claim 4,
characterised in that:
All the jointed lever arms (21) are arranged on a carrier tube (21a) extending parallel to the longitudinal side edge (7), and the end sections of the pivot arms (17) are secured on the carrier tube (21a).

6. Flat glass processing table according to one or more of Claims 1 to 5,
characterised in that:
A beam (26) serving as a breaker element is arranged on the carrier tube (21a), in which situation the end areas of the carrier arms (17) secured to the tube element (21a) engage through cutouts in the beam (26).

7. Flat glass processing table according to one or more of Claims 1 to 6,
characterised in that:
The extensions (22) are equipped on their free ends (24) with folding support feet webs (25).

8. Flat glass processing table according to one or more of Claims 2 to 7,
characterised in that:
The pivot arms (17) feature a U-shaped rail profile element (23) open to the top, in which in each case an extension arm piece (22) is mounted so as to be capable of displacement.

9. Flat glass processing table according to one or more of Claims 1 to 8,
characterised in that:
The pivot arms (17) are spaced apart from the pivot axis element (20) in such a way that they are spaced apart laterally from the linear guide (8) in their approximately vertical position.

10. Flat glass processing table according to one or more of Claims 1 to 9,
characterised in that:
A device (28) is provided for pivoting the pivot arm (17), which engages by means of piston cylinder arrangements (29, 30) on the underside of the pivot arms (17).

11. Flat glass processing table according to Claim 10,
characterised in that:
The cylinders (29) are arranged beneath the tabletop (2), and that the lifting bars (30) engage the tabletop (2) through apertures in the tabletop (2).

12. Flat glass processing table according to Claim 10 and/or 11,
characterised in that:
The lifting bars (30) are connected by joints in approximately the longitudinal centre of the extended pivot arm (17).

## Revendications

1. Table de travail de verte plat (1), avec un plateau de table (2) et un dispositif disposé au-dessus du plateau de table (2) et déplaçable, pour travailler un panneau de verte (5), en particulier pour découper le verte, dans laquelle au-dessous du plan du plateau de table et à côté d'une arête latérale longitudinale (7) du plateau de table (2), est disposée une glissière de guidage linéaire (8) portant un appui (10) du dispositif de travail, en vue de soutenir et de déplacer le dispositif de travail, et la table de travail de verre plat (1) étant équipée d'un dispositif de pose de panneau de verre qui présente deux bras pivotants (17) s'étendant à angle droit par rapport à l'arête latérale longitudinale (7), disposés à distance l'un de l'autre, qui, dans une position de repos horizontale, ne font pas saillie au-dessus de la surface du plateau de table (2), et qui sont susceptibles de pivoter autour d'un axe de pivotement (20), depuis le plateau de table (2), dans une position à peu près verticale, latéralement à côté de l'arête latérale longitudinale (7),
caractérisée en ce que
l'axe de pivotement (20) est disposé dans un espace situé au-dessous du plan de plateau de table et au-dessus du guidage linéaire (8), en ce que les bras pivotants (17), pour ce qui concerne leur position de repos, ne sont réalisés qu'avec une longueur faisant qu'ils n'interfèrent pas dans la course de déplacement de l'appui (10), et en ce qu'une partie de prolongement (22) est prévue pour assurer un prolongement dans la direction de la course de déplacement de l'appui (10) destiné aux bras pivotants (17).

2. Table de travail de verte plat selon la revendication 1, caractérisée en ce que la partie de prolongement est un tronçon de bras (22) pouvant être déployé de façon télescopique hors du bras pivotant (17).

3. Table de travail de verte plat selon la revendication 1 et/ou 2, caractérisée en ce que les bras pivotants (17) sont chacun articulés sur la table de travail de verre plat, à l'aide d'une articulation (18).

4. Table de travail de verre plat selon la revendication 3, caractérisée en ce que les articulations (18) sont constituées chacune d'une nervure de fixation d'articulation (19) fixée à la table, de l'axe de pivotement (20) et d'un bras de levier d'articulation (21) fixé à l'axe de pivotement (20) ainsi que placé en relation fixe avec la zone d'extrémité d'un bras pivotant (17).

5. Table de travail de verte plat selon la revendication 4, caractérisée en ce que tous les bras de levier d'articulation (21) sont disposés sur un tube support (21a) s'étendant parallèlement à l'arête latérale longitudinale (7), et les zones d'extrémité des bras pivotants (17) sont fixées sur le tube support (21a).

6. Table de travail de verre plat selon l'une ou plusieurs des revendications 1 à 5, caractérisée en ce que, sur le tube support (21a), est disposée une poutre (26) servant d'élément de fracture, les zones d'extrémité, fixées à la pièce tubulaire (21a), des bras support (17) traversant des évidements ménagés dans la poutre (26).

7. Table de travail de verre plat selon l'une ou plusieurs des revendications 1 à 5, caractérisée en ce que les prolongements (22) sont équipés, à leurs extrémités libres (24), de traverses supports (25) susceptibles d'être sorties par basculement.

8. Table de travail de verte plat selon l'une ou plusieurs des revendications 2 à 7, caractérisée en ce que les bras pivotants (17) présentent un élément profilé de glissière (23) en forme de U, ouvert vers le haut, dans lequel respectivement un tronçon de bras de prolongement (22) est monté de façon déplaçable.

9. Table de travail de verre plat selon l'une ou plusieurs des revendications 1 à 8, caractérisée en ce que les bras pivotants (17) sont espacés de l'axe de pivotement (20), de manière à ce que, dans leur position à peu près verticale, ils soient espacés latéralement du guidage linéaire (8).

10. Table de travail de verre plat selon l'une ou plusieurs des revendications 1 à 9, caractérisée en ce qu'est prévu un dispositif (28), destiné à faire pivoter les bras pivotants (17) et agissant sur la face inférieure des bras pivotants (17) au moyen de dispositifs à pistons et cylindres (29, 30).

11. Table de travail de verre plat selon la revendication 10, caractérisée en ce que les cylindres (29) sont disposés au-dessous du plateau de table (2), et en ce que les bielles (30) traversent le plateau de table (2), en passant par des ouvertures ménagées dans le plateau de table (2).

12. Table de travail de verte plat selon les revendications 10 et/ou 11, caractérisée en ce que les bielles (30) sont articulées à peu près à milongueur des bras pivotants (17) prolongés.
